# EUROPEAN PATENT APPLICATION

(11) **EP 2 908 111 A1**
(43) Date of publication of application: **19.08.2015**
(21) Application number: 15154576.1
(22) Date of filing: 10.02.2015
(51) Int. Cl.: G01L 19/06

(54) **Instrumentation equipment for nuclear power plant**

(30) Priority: 13.02.2014 JP 2014025041
(71) Applicant: Hitachi, Ltd., Tokyo 100-8280 (JP)
(72) Inventor: Arita, Setsuo, Tokyo, 100-8280 (JP); Kuwana, Ryo, Tokyo, 100-8280 (JP); Baba, Atsushi, Tokyo, 100-8280 (JP); Fushimi, Atsushi, Tokyo, 100-8280 (JP); Shinma, Daisuke, Tokyo, 100-8280 (JP); Hanami, Hideki, Tokyo, 100-8280 (JP); Hara, Isao, Tokyo, 100-8280 (JP); Ito, Takashi, Tokyo, 100-8280 (JP)
(74) Representative: Beetz & Partner mbB

(57) **Abstract**

The present invention provides instrumentation equipment for a nuclear power plant (10) in which the formation of bubbles in an impulse line (11, 11') can be surely inhibited and thereby reliability and maintainability are improved for a long period of time. Instrumentation equipment for a nuclear power plant (10) including: a tubular impulse line (11, 11') provided on a site to measure a fluid to be measured (F, Fh, Fl) in a primary system of a nuclear power plant (100); a sealed liquid (L) filled within the impulse line (11, 11'); a pressure-sensing diaphragm (13, 13') provided in a state of closing one opening of the impulse line (11, 11') to receive a pressure of the fluid to be measured (F, Fh, Fl); a pressure sensor (15) provided on another opening of the impulse line (11, 11') in a state of being exposed to the sealed liquid (L); and a hydrogen storage material (19, 19a, 19b, 19c) provided within the impulse line (11, 11').

## Description

### BACKGROUND OF THE INVENTION

The present invention relates to instrumentation equipment for a nuclear power plant, in particular instrumentation equipment for a nuclear power plant having a pressure transmitter suitable for using in a radiation environment and high-temperature environment.

In instrumentation equipment for a nuclear power plant, a pressure transmitter is utilized in order to measure the quantity of process (water level, pressure, differential pressure and flow rate). A pressure transmitter transfers a pressure of fluid received by a diaphragm to a pressure sensor with a sealed liquid filled within an impulse line, and transmits the electrical signal detected by the pressure sensor outside. There exist a pressure transmitter which measures absolute pressure and one which measures differential pressure or gauge pressure.

These pressure transmitters are used for various measurement of a process fluid in a nuclear power plant, as well as a petroleum-refining plant, a chemical plant, etc., and for example, a precision of ±1% is required in view of ensuring the safety of a plant and the quality of a product. However, in a long-term use, a part of hydrogen (hydrogen atoms, hydrogen molecules and hydrogen ions) contained in a process fluid permeates the diaphragm and remain in the impulse line as bubbles. This increases the pressure within the impulse line to result in the deterioration of pressure-transmission properties, and therefore it was difficult to keep the measurement precision.

Therefore, various techniques have been proposed which suppress the effect of hydrogen which penetrates into the inside of the pressure transmitter through the diaphragm. For example, JP-A-2005-114453 discloses that a hydrogen storage alloy film is formed on one side surface of the diaphragm contacting on the sealed liquid to capture hydrogen which has permeated the diaphragm on the hydrogen storage alloy film, and also reports that according to this technique, the formation of bubbles in the sealed liquid can be inhibited to maintain the pressure-transmission properties.

### SUMMARY OF THE INVENTION

However, the above-described conventional technique is for reducing the effect of hydrogen which has permeated the diaphragm from the outside of a pressure transmitter, and the technique did not take into account hydrogen generated within the impulse line of the pressure transmitter and hydrogen which has permeated the diaphragm into the inside of the impulse line. That is, under a special environment such as a radiation environment or a high-temperature environment, the sealed liquid filled within the impulse line of the pressure transmitter decomposes due to radiation or heat to generate a gas such as hydrogen and hydrocarbons. This also deteriorates the pressure-transmission properties of the pressure transmitter because the generated gas becomes bubbles when exceeding the solubility of the sealed liquid. Thus, particularly, in the case that such pressure transmitter is applied to instrumentation equipment for a nuclear power plant intended for a nuclear power plant primary system under the special environment, the quantity of process cannot be output to a control unit, a monitor and a central control panel within a given precision in a long-term use. As a result, the instrumentation equipment for the nuclear power plant needs to be calibrated in a relatively short period.

Accordingly, the object of the present invention is to provide instrumentation equipment for a nuclear power plant in which the formation of bubbles in the impulse line can be surely inhibited and thereby reliability and maintainability are improved over a long duration.

In order to achieve the object, the instrumentation equipment for a nuclear power plant of the present invention includes a tubular impulse line provided on a site to measure a fluid to be measured in a primary system of the nuclear power plant, a sealed liquid filled within the impulse line, a pressure-sensing diaphragm to receive a pressure of the fluid to be measured, the pressure-sensing diaphragm provided in a state of closing one opening of the impulse line, a pressure sensor provided on another opening of the impulse line in a state of being exposed to the sealed liquid, and a hydrogen storage material provided within the impulse line.

The instrumentation equipment for the nuclear power plant of the present invention with the above-described configuration has the hydrogen storage material within the impulse line. Thereby, hydrogen generated due to the decomposition of the sealed liquid is stored in the hydrogen storage material, and therefore the formation of bubbles in the impulse line can be inhibited and the pressure in the differential pressure line can be stabilized. As a result, the quantity of process can be measured within a given precision over a long duration, leading to a reduction of maintenance costs. That is, reliability and maintainability can be improved.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram illustrating an application example of an instrumentation equipment for a nuclear power plant according to a first embodiment intended for a nuclear power plant primary system;
FIG. 2 is a diagram illustrating the configuration of a pressure transmitter, which is the principal part of the instrumentation equipment for the nuclear power plant according to the first embodiment;
FIG. 3 is a diagram illustrating hydrogen storage with a hydrogen storage material;
FIG. 4 is a diagram illustrating an example of the arrangement of a hydrogen storage material in an impulse line;
FIG. 5 is a diagram illustrating a γ-ray irradiation test for a sealed liquid;
FIG. 6 is a graph showing the relationship between the cumulative dose of γ-ray and the quantity of a generated gas in a sealed liquid;
FIG. 7 is a diagram illustrating the decomposition of methylphenyl silicone oil, which is a sealed liquid, by irradiation of γ-ray, and hydrogen storage with the hydrogen storage material;
FIG. 8 is a diagram illustrating the decomposition of dimethyl silicone oil, which is a sealed liquid, by irradiation of γ-ray, and hydrogen storage with the hydrogen storage material;
FIG. 9 is a diagram illustrating the configuration of a pressure transmitter, which is the principal part of the instrumentation equipment for the nuclear power plant according to a second embodiment;
FIG. 10A, 10B each is a diagram illustrating an example of the arrangement of a hydrogen-permeation-preventing layer in a pressure-sensing diaphragm;
FIG. 11 is a diagram illustrating the configuration of a pressure transmitter, which is the principal part of the instrumentation equipment for the nuclear power plant according to a

### third embodiment; and

FIG. 12 is a diagram illustrating the configuration of a pressure transmitter, which is the principal part of the instrumentation equipment for the nuclear power plant according to a fourth embodiment.

### DETAILED DESCRIPTION OF THE EMBODIMENTS

Hereinafter, the embodiments of the present invention will be described on the basis of the drawings in the following order.
1. First embodiment: Application Example of Pressure Transmitter for Measurement of Differential Pressure
2. Second embodiment: Application Example of Pressure Transmitter Provided with Hydrogen-permeation-preventing Layer for Measurement of Differential Pressure
3. Third embodiment: Application Example of Pressure Transmitter for Measurement of Absolute Pressure
4. Fourth embodiment: Application Example of Pressure Transmitter Provided with Intermediate Diaphragm

### «First Embodiment»

### (Application Example of Pressure Transmitter for Measurement of Differential Pressure)

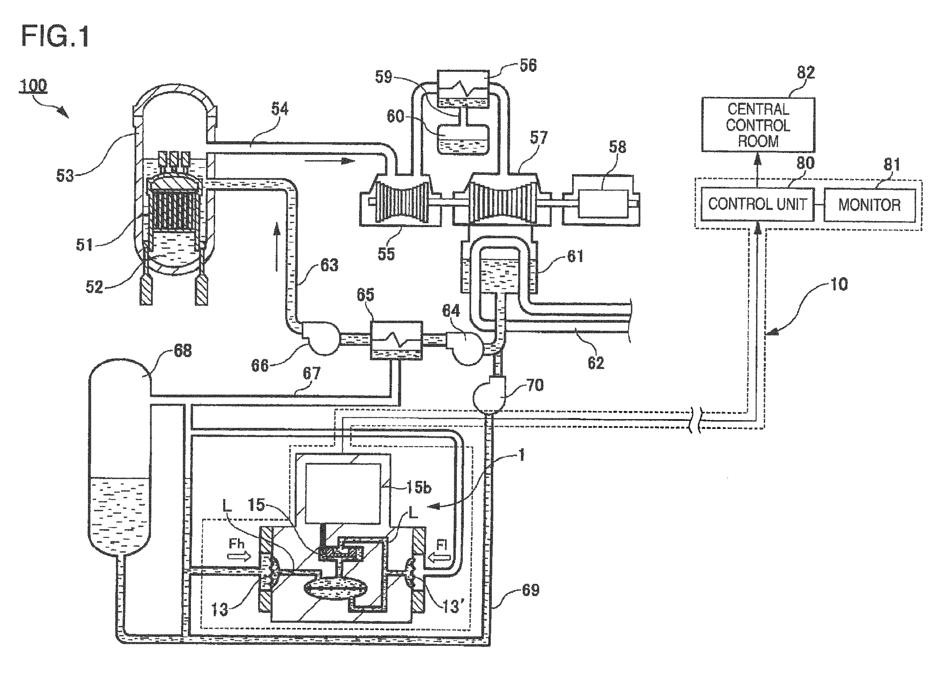

FIG. 1 is a diagram illustrating an application example of the instrumentation equipment for a nuclear power plant according to the first embodiment intended for a nuclear power plant primary system and the configuration of a feedwater system and condensation system in a nuclear power plant of boiling water reactor (BWR) type. Hereinafter will be illustrated an example in which the instrumentation equipment for the nuclear power plant of the present embodiment is employed on a site to measure a process in the primary system of the nuclear power plant 100 on the basis of FIG. 1.

### <Summary of Nuclear Power Plant 100>

As illustrated in FIG. 1, the nuclear power plant 100 has a pressure vessel 53 containing a reactor core 51, which is a bunch of nuclear fuels, soaked in reactor water 52. The pressure vessel 53 is connected to a high-pressure turbine 55 via a main steam piping 54, and the high-pressure turbine 55 is connected to a low-pressure turbine 57 via a moisture separation heater 56. The high-pressure turbine 55 and the low-pressure turbine 57 are disposed coaxially and further connected to a power generator 58 operated with these turbines. The moisture separation heater 56 is provided with a drain tank 60 via a drain piping 59.

The low-pressure turbine 57 is further provided with a condenser 61, and the cooling pipe 62 is arranged in the condenser 61. The condenser 61 and the pressure vessel 53 are connected to each other via a condensate piping 63. The condensate piping 63 is provided with a condensate pump 64, a feedwater heater 65 and a feedwater pump 66 beginning from the side of the condenser 61, and the reactor water 52 is circulated between the pressure vessel 53 and the high-pressure turbine 55 and low-pressure turbine 57. Further, the feedwater heater 65 is provided with a drain tank 68 via the drain piping 67, and the drain tank 68 is connected to a condensate piping 63 in the side of the condenser 61 via a feedwater piping 69 and a drain pump 70.

In the nuclear power plant 100 with the above configuration, the instrumentation equipment for a nuclear power plant 10 is employed for measurement of, for example, a water level in the drain tank 68 for the feedwater heater 65. Next is described the instrumentation equipment for the nuclear power plant 10 of the present invention which can be applied to a nuclear power plant primary system under a special environment such as a radiation environment and a high-temperature environment.

### <Configuration of Instrumentation Equipment for Nuclear Power Plant 10>

The instrumentation equipment for the nuclear power plant 10 has a pressure transmitter 1, a control unit 80 in which a output signal from the pressure transmitter 1 is incorporated and a monitor 81 which outputs information of the water level measured with the control unit 80. In particular, the instrumentation equipment for the nuclear power plant 10 of the first embodiment has the pressure transmitter 1 for measurement of differential pressure, the configuration of which is characteristic. Hereinafter, the pressure transmitter 1, which is the characterizing part of the instrumentation equipment for the nuclear power plant 10, will be described in more detail.

### <Configuration of Pressure Transmitter 1>

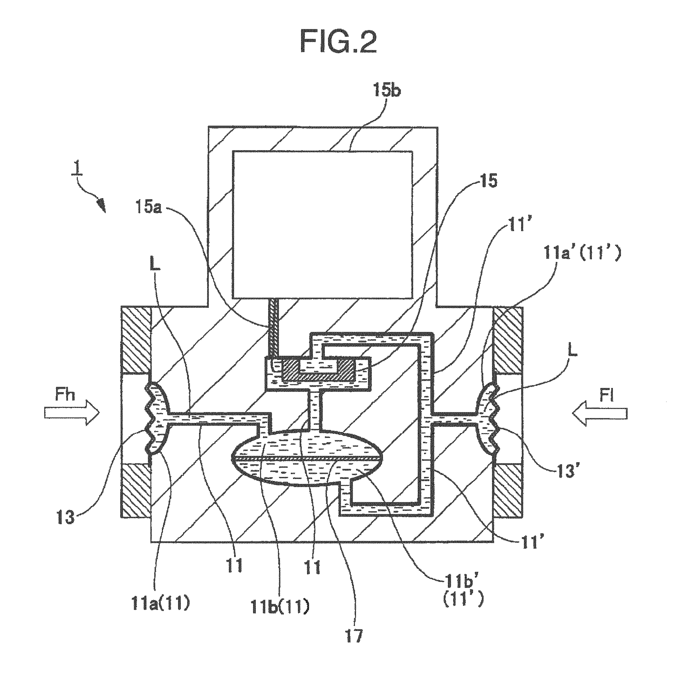

FIG. 2 is a diagram illustrating the configuration of a pressure transmitter, which is the principal part of the instrumentation equipment for a nuclear power plant according to the first embodiment. The pressure transmitter 1 illustrated in FIG. 2 is used for pressure measurement of the reactor water 52 in the nuclear power plant primary system as a fluid to be measured, and measures a pressure difference between two points (high-pressure side and low-pressure side).

The pressure transmitter 1 has an impulse line 11 provided for the fluid to be measured Fh in the high-pressure side and an impulse line 11' provided for the fluid to be measured Fl in the lower-pressure side. The sealed liquid L is filled within a pair of impulse lines 11, 11'. One openings of the impulse lines 11, 11' are closed by pressure-sensing diaphragms 13, 13', respectively. In addition, the pressure transmitter 1 has one pressure sensor 15 which is commonly provided on the other openings of the impulse lines 11, 11', and one center diaphragm 17 provided in parallel with the pressure sensor 15. Furthermore, a hydrogen storage material is provided within the impulse lines 11, 11', which is a particularly characteristic configuration.

Hereinafter, details in each component provided in the pressure transmitter 1 will be described in the order of the impulse lines 11, 11', the sealed liquid L, the pressure-sensing diaphragms 13, 13', the pressure sensor 15, the center diaphragm 17 and the hydrogen storage material.

### [Impulse Lines 11, 11']

The impulse lines 11, 11' have pressure-receiving chambers 11a, 11a' respectively in which the opening diameter is enlarged at one opening parts of the respective impulse lines 11, 11'. The opening parts of the impulse lines 11, 11' enlarged by the respective pressure-receiving chambers 11a, 11a' are closed by the pressure-sensing diaphragms 13, 13', respectively. Then, the impulse lines 11, 11' are installed at measurement sites in the primary system of the nuclear power plant 100. The impulse lines 11, 11' are connected to pipings in which the fluids to be measured flow at the openings on the side closed by the respective pressure-sensing diaphragms 13, 13'. The pressure-receiving chambers 11a, 11a' have an internal shape which does not inhibit the motion of the respective pressure-sensing diaphragms 13, 13' due to receiving a pressure.

The impulse lines 11, 11'further have pressure-relieving chambers 11b, 11b' for an excess pressure in which the opening diameter is enlarged at the other opening parts on the side opposite to the side closed by the respective pressure-sensing diaphragms 13, 13'. The pressure-relieving chambers 11b, 11b' which have a shape with the opening diameter enlarged at the respective impulse lines 11, 11' are disposed so as to hold one center diaphragm 17 therebetween, and separated from each other by the center diaphragm 17. Each of the pressure-relieving chambers 11b, 11b' has an internal shape which does not inhibit the motion of the center diaphragm 17 due to receiving a pressure.

In this configuration, the impulse lines 11, 11' also have a bifurcated path and the pressure sensor 15 is provided on the forefront openings of the bifurcated impulse lines 11, 11'. Here, for example, the impulse line 11, which is provided for the fluid to be measured Fh in the high-pressure side, has a path bifurcated at the wall of the pressure-relieving chamber 11b. On the other hand, the impulse line 11', which is provided for the fluid to be measured Fl in the low-pressure side, has a path bifurcated before the pressure-relieving chamber 11b'.

The forefront openings of the bifurcated paths of the impulse lines 11, 11' are disposed so as to hold one pressure sensor 15 therebetween, and the impulse lines 11, 11' are separated from each other by the pressure sensor 15.

### [Sealed Liquid L]

The sealed liquid L is sealed within one pair of the impulse lines 11, 11' closed as described above, and filled within the impulse lines 11, 11' including the pressure-receiving chambers 11a, 11a', the pressure-relieving chambers 11b, 11b' and the bifurcated parts to the pressure sensor 15. The sealed liquids L filled within the pair of the impulse lines 11, 11' may be the same type. The sealed liquid L is, for example, silicone oil, and an example thereof is dimethyl silicone oil or methylphenyl silicone oil, which contains a phenyl group. Silicone oil containing the phenyl group is specifically the methylphenyl silicone oil represented as Formula (1). The phenyl group is a group which has a double-bond structure with a high bonding strength, and less likely to leave hydrogen atoms and methyl groups due to radiolysis and pyrolysis. Therefore, particularly as a sealed liquid for instrumentation equipment for the nuclear power plant applied to the primary system of the nuclear power plant 100, the methylphenyl silicone oil is preferably filled within a part subject to radiolysis and pyrolysis.

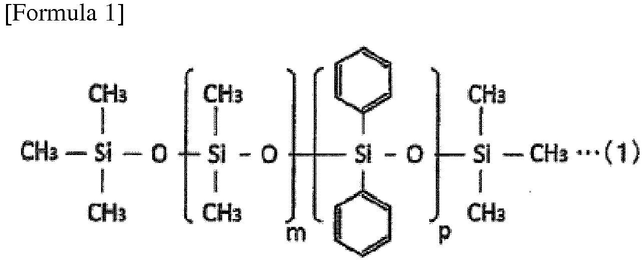

The more phenyl groups the methylphenyl silicone oil represented as Formula (1) has relative to the number of methyl groups bonding to silicon, the better it is, and the larger p is relative to m, the more preferable it is.

In the case that the environments in which the impulse lines 11, 11' are disposed are uneven, the sealed liquid L filled within only one of the impulse lines 11, 11' may be the silicone oil containing the phenyl group, and the other sealed liquid L may be common one such as dimethyl silicone oil.

### [Pressure-sensing Diaphragms 13, 13']

The pressure-sensing diaphragms 13, 13' are diaphragms which are directly exposed to the fluids to be measured Fh, Fl respectively to receive the pressure. The fluids to be measured Fh, Fl are the reactor water 52 in the nuclear power plant primary system in which the pressure transmitter 1 is installed.

The pressure-sensing diaphragms 13, 13' are fixed against the impulse lines 11, 11' in the state of closing the openings of the pressure-receiving chambers 11a, 11a' in the impulse lines 11, 11', respectively. Further, the pressure-sensing diaphragms 13, 13' are installed in the primary system of the nuclear power plant 100 so that one pressure-sensing c, diaphragm 13 is exposed to the fluid to be measured Fh in the high-pressure side and the other pressure-sensing diaphragm 13' is exposed to the fluid to be measured Fl in the low-pressure side. Accordingly, each of the pressure-sensing diaphragms 13, 13' is composed of a material for which resistance to the fluids to be measured Fh, Fl is considered, such as stainless steel. Moreover, each of the pressure-sensing diaphragms 13, 13' may be one processed in the shape of corrugation, for example.

### [Pressure Sensor 15]

The pressure sensor 15 is for detecting a pressure transmitted by the sealed liquid L filled within the impulse lines 11, 11', and for example, is a semiconductor pressure sensor. The pressure sensor 15 converts the difference of pressures applied on both sides of the semiconductor chip into an electrical signal to output. The pressure sensor 15 is held between the impulse lines 11, 11' so as to receive a pressure transferred by the sealed liquid L in the impulse line 11 on one surface and receive a pressure transferred by the sealed liquid L in the impulse line 11' on the other surface. This provides a configuration in which the pressure difference between the pressure of the fluid to be measured Fh in the high-pressure side received by the pressure-sensing diaphragm 13 and the pressure of the fluid to be measured Fl in the low-pressure side received by the pressure-sensing diaphragm 13' is detected.

To the pressure sensor 15 an output circuit 15b is connected through a lead 15a. An output circuit 15b is connected to the control unit 80 in FIG. 1.

### [Center Diaphragm 17]

The center diaphragm 17 is a diaphragm for protecting from overload which has a less amount of deformation to a pressure applied and is disposed in parallel with the pressure sensor 15 for the pair of impulse lines 11, 11'. The center diaphragm 17 is provided so as to close the opening of the pressure-relieving chambers 11b, 11b' provided in the impulse lines 11, 11', respectively, to separate the impulse lines 11, 11' at the opening and to expose both sides to the sealed liquid L. Thereby, the center diaphragm 17 itself does not deform significantly even when an excess pressure is applied to one of the pressure-sensing diaphragms 13, 13', and therefore the amount of the deformation of the pressure-sensing diaphragms 13, 13' is not large as well, resulting in a configuration in which the pressure-sensing diaphragms 13, 13' are less likely to be damaged.

### [Hydrogen Storage Material]

The hydrogen storage material is provided within the impulse lines 11, 11' to thereby be disposed in the state of contacting with the sealed liquid L. In this case, in particular the hydrogen storage material is preferably disposed along the direction of the arrangement of the impulse lines 11, 11'.

Here, the hydrogen storage material is composed of a metal with characteristics of incorporating hydrogen or an alloy thereof and stores hydrogen and hydrogen atoms in a hydrocarbon (in detail, a saturated chain hydrocarbon) generated in the impulse lines 11, 11'. The hydrogen storage material is specifically palladium, magnesium, vanadium, titanium, manganese, zirconium, nickel, niobium, cobalt, calcium, or an alloy thereof.

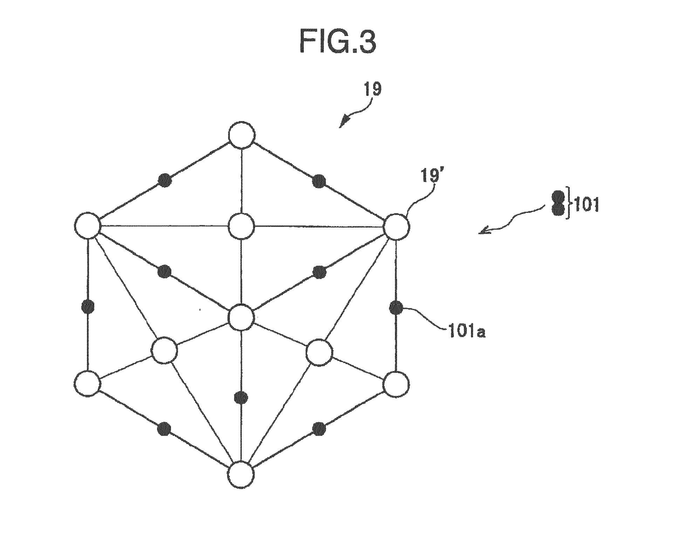

FIG. 3 is a diagram illustrating hydrogen storage with a hydrogen storage material, specifically an example in which palladium (Pd) is used as the hydrogen storage material 19. As shown in FIG. 3, the crystalline structure of palladium, the hydrogen storage material 19, is the face-centered cubic lattice, and a hydrogen molecule 101 is stored as a hydrogen atom 101a between the palladium atoms 19'. It is known that palladium stores hydrogen of 935 times as large a volume as that of palladium itself by the hydrogen storage.

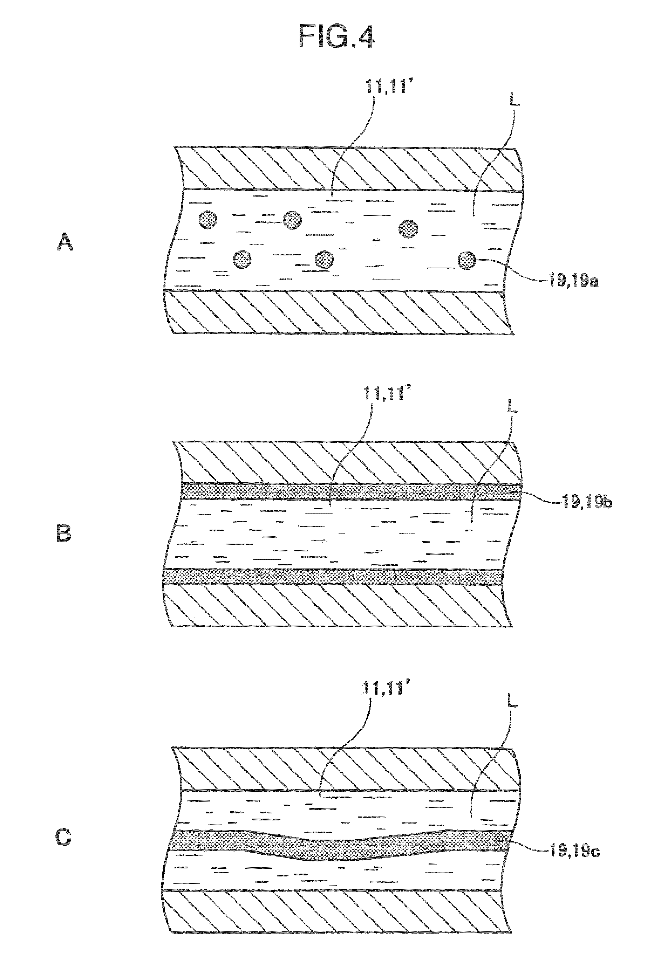

FIGS. 4A to 4C are diagrams illustrating examples of the arrangement of the hydrogen storage material 19 in the impulse lines 11, 11'. Hereinafter, the disposition state of the hydrogen storage material 19 within the impulse lines 11, 11' will be described on the basis of FIGS. 4A to 4C. Note that the hydrogen storage materials 19a to 19c of FIGS. 4A to 4C, described below respectively, may be used in combination.

FIG. 4A is a diagram illustrating a configuration in which the granular hydrogen storage material 19a is mixed in the sealed liquid L filled within the impulse lines 11, 11'. In this configuration, the hydrogen storage material 19a is provided along the direction of the arrangement of the impulse lines 11, 11'.

In this case, it is preferable that the granular hydrogen storage material 19a be dispersed in the sealed liquid L and thereby mixed in the sealed liquid L homogenously. This enables the hydrogen storage material 19a to influence the impulse lines 11, 11' over the nearly whole area thereof. In addition, the granular hydrogen storage material 19a may be powder with a small particle diameter or solids with a larger particle diameter. The smaller the diameter of the hydrogen storage material 19a becomes, the larger the surface area thereof becomes to accelerate the storage rate of hydrogen and therefore the more preferable. In this case, the hydrogen storage material 19a may constitute a colloidal liquid in a state of being mixed with the sealed liquid L depending on the particle size of the hydrogen storage material 19a.

Further, in the case that the hydrogen storage material 19a is solids with a certain size, the shape is not limited. In this case, using a porous hydrogen storage material as the hydrogen storage material 19a makes the surface area thereof larger to accelerate the storage rate of hydrogen, and therefore is preferable.

FIG. 4B is a diagram illustrating a configuration in which the hydrogen storage material 19b is provided on the wall of the impulse lines 11, 11'. In this configuration, the hydrogen storage material 19b is provided along the direction of the arrangement of the impulse lines 11, 11'.

In this case, the hydrogen storage material 19b is provided on the inner wall of the impulse lines 11, 11', for example as a film formed with a plating method or a sputtering method. The wall of the impulse lines 11, 11' to be provided with the hydrogen storage material 19b includes a wall surface with which the sealed liquid L contacts in the pressure-receiving chambers 11a, 11a' and the pressure-relieving chambers 11b, 11b' described using FIG. 2. Furthermore, it is preferable that the hydrogen storage material 19b be formed as a film on the inner wall of the impulse lines 11, 11' in as large an area as possible.

In addition, as an example in which the hydrogen storage material 19b is provided on the wall surface of the impulse lines 11, 11', a configuration in which the granular hydrogen storage material 19a described using FIG. 4A is fixed on the wall surface of the impulse lines 11, 11' may also be employed. In this case, it is preferable to weld to fix the granular hydrogen storage material 19a to the wall surface of the impulse lines 11, 11'. This configuration can prevent the deterioration of the pressure-sensing diaphragms 13, 13' and the center diaphragm 17 due to their collision with the granular hydrogen storage material 19a with a certain size.

In a configuration in which the center diaphragm 17 is provided, the hydrogen storage material 19b may be provided on the center diaphragm 17. In this case, providing the hydrogen storage material 19b on both surfaces of the center diaphragm 17 contacting with the sealed liquid L enables to further increase the surface area of the hydrogen storage material 19b.

FIG. 4C is a diagram illustrating a configuration in which the hydrogen storage material 19c is laid within the impulse lines 11, 11'. The hydrogen storage material 19c is, for example, rod-like and is laid along the path of the impulse lines 11, 11'. In this configuration, the hydrogen storage material 19c is provided along the direction of the arrangement of the impulse lines 11, 11'. The rod-like hydrogen storage material 19c may be a wire with a circular cross-section, and it is preferable to make the cross-section wide as if being pressed and extended, use a porous material as the rod-like hydrogen storage material, or lay the rod-like hydrogen storage material 19c spirally because the surface area increases to accelerate the store rate of hydrogen. The rod-like hydrogen storage material 19c is easy to process and can reduce the cost.

In the case that the environments in which the impulse lines 11, 11' are disposed are uneven, a configuration in which the hydrogen storage material 19 is provided within only one of the impulse lines 11, 11' may be employed.

The pressure transmitter 1 constituted as described above is provided, for example, for measurement of the water level in the drain tank 68 for the feedwater heater 65 as shown in FIG. 1. Specifically, the pressure transmitter 1 is provided so that a fluid flowing in the piping upstream of the drain tank 68, i.e., a fluid flowing in the feedwater piping 69 between the drain tank 68 and the condenser 61 is supplied to one pressure-sensing diaphragm 13 in the pressure transmitter 1 as the fluid to be measured Fh in the high-pressure side. In addition, the pressure transmitter 1 is provided so that a fluid flowing in the piping downstream of the drain tank 68, i.e., a fluid flowing in the drain piping 67 between the drain tank 68 and the feedwater heater 65 is supplied to the other pressure-sensing diaphragm 13' in the pressure transmitter 1 as the fluid to be measured Fl in the low-pressure side.

This provides a configuration in which the differential pressure between the upstream side and the downstream side of the drain tank 68 is received by the pressure sensor 15 in the pressure transmitter 1 to be output to the output circuit 15b.

Furthermore, in the configuration, the information from the output circuit 15b described above is transferred to the monitor 81 and the central control panel 82 (installed in the central control room, although not shown in figures) via the control unit 80. Then, the information (differential pressure) output to the output circuit 15b is monitored as the water level in the drain tank 68, and on the basis of the value the water level is controlled so as to be a given value.

In the above description, the configuration has been exemplified in which the instrumentation equipment for the nuclear power plant 10 is used for the measurement of the water level in the drain tank 68 for the feedwater heater 65. However, the position of the instrumentation equipment for the nuclear power plant 10 to be installed on is not limited to this, and in particular it is effective to employ the instrumentation equipment for the nuclear power plant 10 for various process measurement for the reactor water 52, which directly cools the reactor core 51, as a fluid to be measured. For example, in the measurement of the water level in the drain tank 60 for the moisture separation heater 56 and the condenser 61, and further in the measurement of the flow rate in the main steam piping 54 and the condensate piping 63, using the instrumentation equipment for the nuclear power plant 10 similarly provides a sufficient effect.

Although the instrumentation equipment for a nuclear power plant 10 is described above as one to measure the differential pressure between the upstream side and the downstream side in the system of the nuclear power plant 100, measurement is not limited to this, and for example, the instrumentation equipment for the nuclear power plant 10 may measure the gauge pressure of the fluid to be measured Fh in the high-pressure side using the atmosphere as the fluid to be measured Fl in the low-pressure side.

### <Effect>

The above-described feedwater system and condensation system in the nuclear power plant 100 is the primary system of the nuclear power plant and in the special environment with a high radiation dose, in which the sealed liquid L in the instrumentation equipment for the nuclear power plant 10 provided for the measurement of the water level in the drain tank 68 is subject to radiolysis.

In addition, the reactor water 52 which directly cools the reactor core 51 in the nuclear power plant 100 is the fluid to be measured and contains a large amount of hydrogen generated due to radiolysis etc. This reactor water 52 is introduced as steam from the main steam piping 54 to the moisture separation heater 56, the drain tank 60, the feedwater heater 65, the condenser 61, the drain tank 68, etc. The reactor water 52 introduced as steam is condensed into condensed water by the moisture separation heater 56, the feedwater heater 65, etc. On the other hand, noncondensable hydrogen contained in the steam is accumulated in the upper part due to the smaller specific gravity than that of the saturated steam and the concentration gradually increases. The higher the concentration of the hydrogen accumulated in the upper part of the reactor water 52, which is the fluid to be measured, the more likely the hydrogen is to permeate the pressure-sensing diaphragms 13, 13'.

The instrumentation equipment for the nuclear power plant 10 of the first embodiment is provided in such nuclear power plant primary system and has the configuration in which the pressure transmitter 1 having the hydrogen storage material 19 within the impulse lines 11, 11' is provided. Thereby, the hydrogen generated due to the radiolysis of the sealed liquid L in the radiation environment or the hydrogen which permeates the pressure-sensing diaphragms 13, 13' to be incorporated in the sealed liquid L is stored in the hydrogen storage material 19. This enables to lower the concentration of hydrocarbons such as methane, ethane and propane in the sealed liquid L and inhibit the formation of bubbles in the impulse lines 11, 11'.

Accordingly, the pressure in the impulse lines 11, 11' can be stabilized to maintain the pressure-transmission properties over a long duration, and therefore the variation of indicated values can be reduced to keep the allowable error precision of the instrumentation equipment for the nuclear power plant 10 (e.g., a precision of ±1%) for a long period of time. Due to the above results, the quantity of process can be measured within a given precision over a long duration and the cost of maintenance can be reduced. That is, reliability and maintainability can be improved. Particularly, the nearer the pressure on the upstream side and the downstream side in the piping is to the vacuum, the less the pressure of the sealed liquid L is and the solubility decreases, and therefore a remarkable effect can be achieved.

In addition, it was found that, in the case that silicone oil containing the phenyl group is used as the sealed liquid L for the pressure transmitter 1 shown in FIG. 2, the formation of bubbles due to the radiolysis of the sealed liquid L under a radiation environment can be inhibited in comparison with the case that the common dimethyl silicone oil is used.

Here will be described a result of an irradiation test for the methylphenyl silicone oil described above as the sealed liquid L of the present embodiment and the dimethyl silicone oil which is commonly used as a sealed liquid for the pressure transmitter.

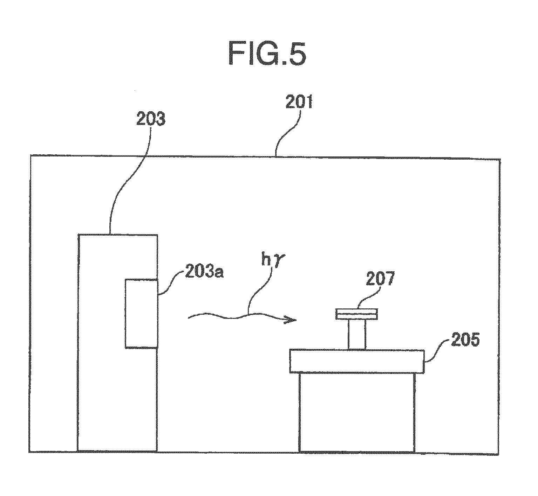

FIG. 5 is a configuration diagram of a test apparatus for the irradiation test. As shown FIG. 5, the irradiation test was conducted in an irradiation chamber 201. A radiation source apparatus 203 for the γ-ray hγ and an oil-enclosing container 207 placed on a setting table 205 were disposed in the irradiation chamber 201. The radiation source apparatus 203 is an apparatus which generates the γ-ray hγ from a cobalt radiation source, and has an irradiation port 203a for irradiating the generated γ-ray hγ. The oil-enclosing container 207 is a container made of stainless steel within which a sealed liquid being a sample for the irradiation test is filled, and disposed at the position to which the γ-ray hγ irradiated from the irradiation port 203a of the radiation source apparatus 203 is directed. The oil-enclosing container 207 is disposed away from the radiation source apparatus 203 by a given distance so that the sealed liquid filled within the container can be irradiated with a given dose of the γ-ray hγ.

The irradiation test using the above-described test apparatus was conducted for two cases, i.e., the case that the methylphenyl silicone oil was filled within the oil-enclosing container 207 and the case that the dimethyl silicone oil was filled within the container.

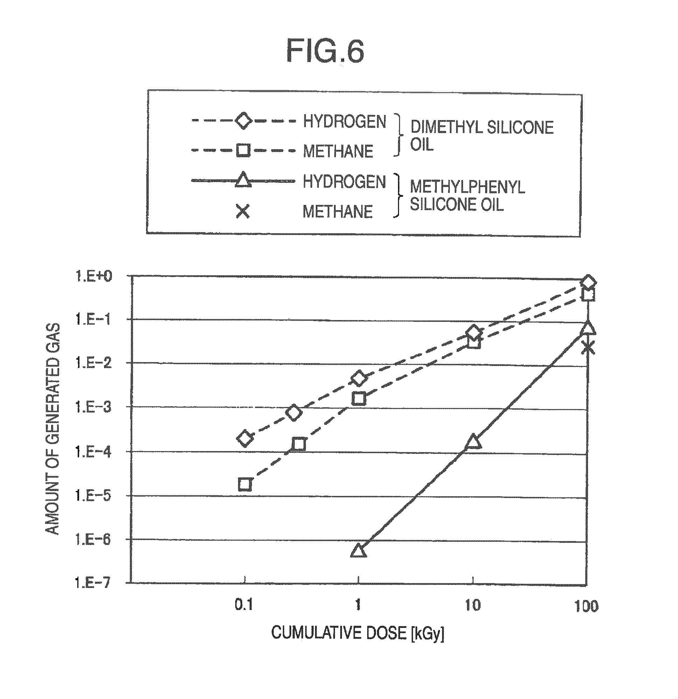

After a given cumulative dose of the γ-ray hγ was irradiated, a gas generated and dissolved in the sealed liquid was taken out from the oil-enclosing container 207 and measured its components and the quantity thereof using a gas chromatography. FIG. 6 is a graph showing the result of the analysis using a gas chromatography, i.e., the relative value of the quantity of the generated gas, which is the integration of the dose of the γ-ray hγ, with reference to the cumulative dose.

As shown in the graph in FIG. 6, as a result of the analysis with gas chromatography, it was confirmed that hydrogen and methane were generated by the irradiation of the γ-ray hγ in both cases of the methylphenyl silicone oil and the dimethyl silicone oil. Benzene was not detected from the methylphenyl silicone oil. In addition, it was confirmed that the quantity of the generated hydrogen and methane increased as the cumulative dose increased in both cases of the methylphenyl silicone oil and the dimethyl silicone oil. Note that only one data for the methane generated in the methylphenyl silicone oil is recorded for a reason related to recording of the measurement.

Moreover, the quantity of the generated hydrogen (hydrogen molecule) and methane in the methylphenyl silicone oil were less than those in the dimethyl silicone oil. For example, regarding to hydrogen, the quantity of the generated hydrogen in the methylphenyl silicone oil at a cumulative dose of 1 kGy was less by four orders than that in the dimethyl silicone oil. Regarding to methane, the quantity of the generated methane in the methylphenyl silicone oil at a cumulative dose of 100 kGy was less by about an order than that in the dimethyl silicone oil.

As described above, it was confirmed that the quantities of hydrogen and hydrocarbons generated by irradiation in the methylphenyl silicone oil, which is used as the sealed liquid L for the pressure transmitter 1 of the first embodiment, were less than those in the dimethyl silicone oil, which is used as a sealed liquid in a common pressure transmitter. In addition, it was confirmed that benzene was not detected from the methylphenyl silicone oil and the leaving of the phenyl group due to radiolysis was also suppressed.

That is, it was found for the first time in the present irradiation test that, in the case that the methylphenyl silicone oil is used as the sealed liquid L, the quantity of the gas generated by irradiation can be significantly reduced in comparison with the case that the dimethyl silicone oil, which is used as the sealed liquid of the common pressure transmitter, is used.

Moreover, the pressure transmitter 1 of the first embodiment described using FIG. 2 has the configuration in which the hydrogen storage material 19 is provided within the impulse lines 11, 11'. Thereby, even when hydrogen atoms or the methyl group leaves from the dimethyl silicone oil or the methylphenyl silicone oil used as the sealed liquid L under the radiation environment as in the above-described irradiation test, the hydrogen is stored in the hydrogen storage material 19. Furthermore, hydrogen which permeates the pressure-sensing diaphragms 13, 13' to be incorporated in the sealed liquid L is also stored in the hydrogen storage material 19. Accordingly, the concentration of hydrocarbons such as methane, ethane and propane in the sealed liquid L can be lowered. In addition, in the case that the methylphenyl silicone oil is used as the sealed liquid L, the quantities of hydrogen and hydrocarbons generated by the irradiation can be still more suppressed and the concentration of hydrocarbons such as methane, ethane and propane in the sealed liquid L can be still more lowered in comparison with the case that the dimethyl silicone oil is used.

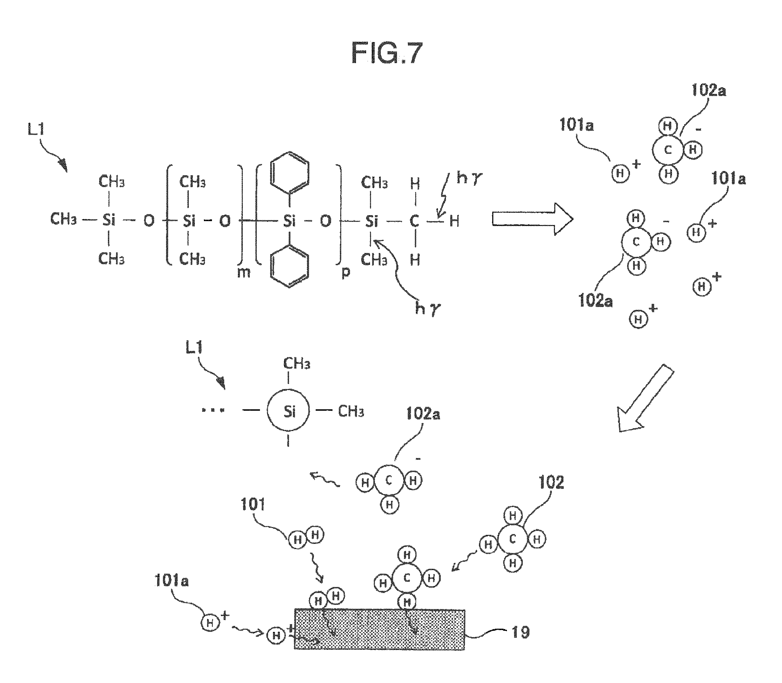

Here, FIG. 7 is a diagram illustrating the decomposition of methylphenyl silicone oil due to irradiation of the γ-ray hγ etc., and hydrogen storage with the hydrogen storage material 19. As for irradiation to the sealed liquid L consisting of the methylphenyl silicone oil L1, there exist the case that the pressure transmitter 1 is exposed to an area of radiation atmosphere and also exist the case that the sealed liquid L is irradiated by radiation contained in the fluids to be measured Fh, Fl through the pressure-sensing diaphragms 13, 13'.

First, the methylphenyl silicone oil L1 used as the sealed liquid is irradiated with the γ-ray hγ, then a C-H bond or Si-C bond in the methylphenyl silicone oil L1 is broken. Thereby, the hydrogen atom 101a or the methyl group 102a leaves from the methylphenyl silicone oil L1.

Thereafter, the hydrogen molecule 101 generated through bonding of the two hydrogen atoms 101a which have left contacts with the hydrogen storage material 19 to be stored within the hydrogen storage material 19 as the hydrogen atom 101a. Thereby, not only the generation of the hydrogen molecule 101 can be inhibited, but also the generation of the methane 102 can be inhibited because of the reduction of the quantity of the hydrogen atoms 101a to bond to the methyl group 102a. Further, the methyl group 102a which has left from the methylphenyl silicone oil L1 bonds again to the dangling bond of the methylphenyl silicone oil L1. This can inhibit the generation of a gas in a sealed liquid. In contrast, in a configuration in which the hydrogen storage material 19 is not provided, the generation of the hydrogen molecule 101 or the methane 102 cannot be inhibited, moreover hydrocarbons such as ethane, propane and butane are generated due to the leaving of hydrogen atom 101a from the methyl group 102a and bonding thereof, and they become bubbles to increase the pressure within the impulse line.

The case that the hydrogen storage material 19 stores hydrogen atoms in a hydrocarbon is as follows. That is, some of the hydrogen atoms 101a and the methyl groups 102a which have left from the methylphenyl silicone oil L1 due to radiolysis bond together to generate the methane 102. Thereafter, once the methane 102 contacts with the surface of the hydrogen storage material 19, the methane 102 dissociates into the methyl group 102a and the hydrogen atom 101a on the surface. The hydrogen atom 101a which has left is stored in the hydrogen storage material 19 and the methyl group 102a eventually becomes a carbon atom and is adsorbed on the surface of the hydrogen storage material 19. The same applies to ethane, propane and butane generated in the sealed liquid, and thereby can prevent the pressure from increasing within the impulse line due to the accumulation of hydrocarbons such as the methane 102 as bubbles.

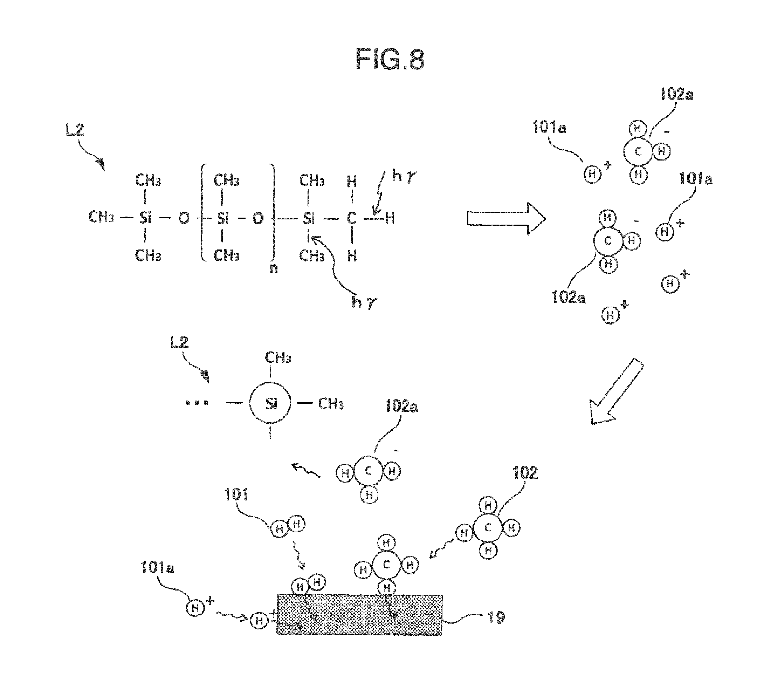

Here, FIG. 8 is a diagram illustrating the decomposition of the silicone oil (dimethyl silicone oil) due to the irradiation of the γ-ray hγ etc., and hydrogen storage with the hydrogen storage material. As for irradiation to the sealed liquid L consisting of the silicone oil, there exist the case that the pressure transmitter 1 is exposed to an area of radiation atmosphere and also exist the case that the sealed liquid L is irradiated by radiation contained in the fluids to be measured Fh, Fl through the pressure-sensing diaphragms 13, 13'.

First, the silicone oil L2 used as the sealed liquid L is irradiated with the γ-ray hγ, then the C-H bond or Si-C bond in the silicone oil L2 is broken. Thereby, the hydrogen atom 101a or the methyl group 102a leaves from the silicone oil L2.

Thereafter, the hydrogen molecule 101 generated through bonding of the two hydrogen atoms 101a which have left contacts with the hydrogen storage material 19 to be stored within the hydrogen storage material 19 as the hydrogen atom 101a. Thereby, not only the generation of the hydrogen molecule 101 can be inhibited, but also the generation of the methane 102 can be inhibited because of the reduction of the quantity of the hydrogen atoms 101a to bond to the methyl group 102a. Further, the methyl group 102a which has left from the silicone oil L2 bonds again to the dangling bond of the silicone oil L2. This can inhibit the generation of a gas in the sealed liquid. In contrast, in a configuration in which the hydrogen storage material is not provided, the generation of the hydrogen molecule 101 or the methane 102 cannot be inhibited, and moreover, hydrocarbons such as ethane, propane and butane are generated due to the leaving of hydrogen atom 101a from the methyl group 102a and bonding thereof, and they become bubbles to increase the pressure within the impulse line.

The case that the hydrogen storage material 19 stores the hydrogen atom 101a in a hydrocarbon is as follows. That is, some of the hydrogen atoms 101a and the methyl groups 102a which have left from the silicone oil L2 due to radiolysis bond together to generate the methane 102. Thereafter, once the methane 102 contacts with the surface of the hydrogen storage material 19, the methane 102 dissociates into the methyl group 102a and the hydrogen atom 101a on the surface. The hydrogen atom 101a which has left is stored in the hydrogen storage material 19 and the methyl group 102a eventually becomes a carbon atom and is adsorbed on the surface of the hydrogen storage material 19. The same applies to ethane, propane and butane generated in the sealed liquid, and thereby can prevent the pressure from increasing within the impulse line due to the accumulation of hydrocarbons such as the methane 102 as bubbles.

As described above, in the case that the methylphenyl silicone oil is used as the sealed liquid L for the pressure transmitter, the concentration of hydrocarbons such as methane, ethane and propane in the sealed liquid L can be still more lowered and the formation of bubbles in the impulse lines 11, 11' can be still more inhibited in comparison with the case that the dimethyl silicone oil is used. Further, the instrumentation equipment for the nuclear power plant having such pressure transmitter has an improved reliability and maintainability in addition to the above effects.

### «Second Embodiment»

### (Application Example of Pressure Transmitter Provided with Hydrogen-permeation-preventing layer for Measurement of Differential Pressure)

In the instrumentation equipment for the nuclear power plant according to the second embodiment, only the configuration of a pressure transmitter is different from that in the above instrumentation equipment for the nuclear power plant in FIG. 2 and other configurations including the disposition state for the nuclear power plant primary system are the same as in FIG. 2. Hereinafter, the pressure transmitter 2, which is the characterizing part of the instrumentation equipment for the nuclear power plant according to the present embodiment, will be described in detail.

### <Configuration of Pressure Transmitter 2>

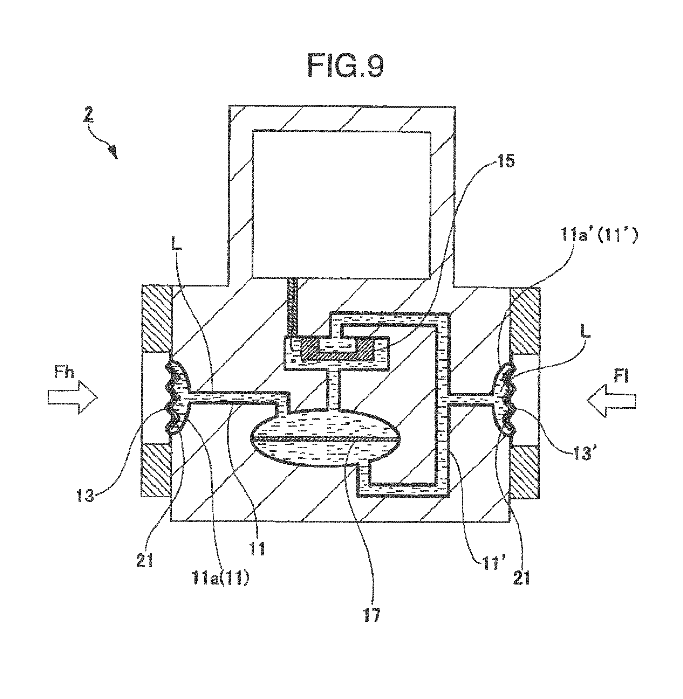

FIG. 9 is a diagram illustrating the configuration of a pressure transmitter, which is the principal part of the instrumentation equipment for the nuclear power plant according to the second embodiment. The pressure transmitter 2 illustrated in FIG. 9 is used for the pressure measurement of the reactor water 52 in the nuclear power plant primary system illustrated in FIG. 1 as a fluid to be measured, and measures the pressure difference between two points (high-pressure side and low-pressure side). The pressure transmitter 2 is different from the pressure transmitter 1 described using FIG. 2 in that a hydrogen-permeation-preventing layer 21 is provided on the pressure-sensing diaphragms 13, 13', and the other configurations are the same. Therefore, the same configuration as in the pressure transmitter 1 illustrated in FIG. 2 is given with the identical symbol and duplicating descriptions are omitted.

### [Hydrogen-permeation-preventing Layers 21]

The hydrogen-permeation-preventing layer 21 is provided on the pressure-sensing diaphragm 13, 13'. The hydrogen-permeation-preventing layer 21 is preferably provided on the surface layer on the side of the impulse lines 11, 11' or as an intermediate layer in the pressure-sensing diaphragms 13, 13', and disposed in a state of not contacting with the fluids to be measured Fh, Fl. This provides a configuration in which the effect of the hydrogen-permeation-preventing layer 21 on the reactor water 52 as the fluids to be measured Fh, Fl and the process system in which the fluids to be measured Fh, Fl involved can be suppressed.

The hydrogen-permeation-preventing layer 21 includes a hydrogen storage material or a hydrogen blocking material. The hydrogen storage material included in the hydrogen-permeation-preventing layer 21 is the same material as the hydrogen storage material described in the first embodiment and stores hydrogen from the sides of the fluids to be measured Fh, Fl to prevent the permeation of hydrogen into the impulse lines 11, 11'. Thereby, the pressure within the impulse lines 11, 11' can be stabilized.

On the other hand, the hydrogen blocking material included in the hydrogen-permeation-preventing layer 21 is a material which can block storage and permeation of hydrogen per se and thereby prevents the permeation of hydrogen from the sides of the fluids to be measured Fh, Fl into the impulse lines 11, 11'. Such a hydrogen blocking material is specifically gold, silver, copper, platinum, aluminum, chromium, titanium or an alloy thereof.

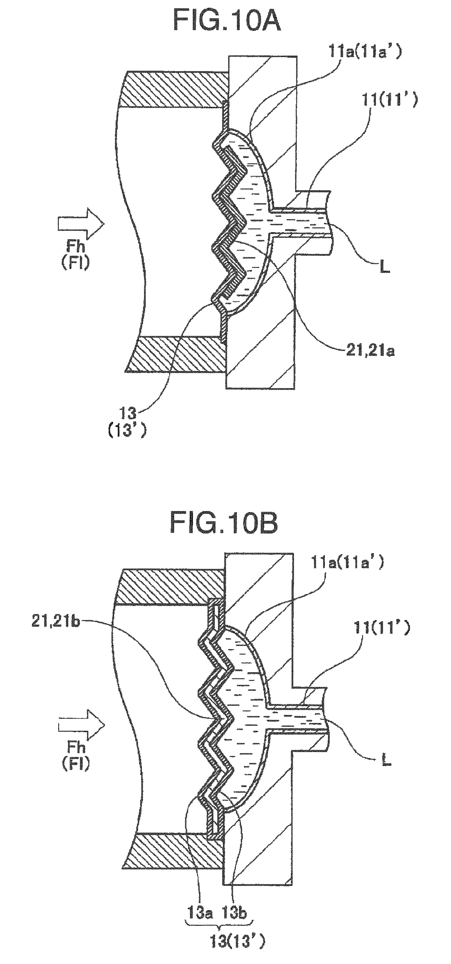

FIGS. 10A and 10B are diagrams illustrating examples of the arrangement of the hydrogen-permeation-preventing layer 21 in the pressure-sensing diaphragm 13, 13', and enlarged views of the pressure-sensing diaphragm 13 in the high-pressure side in FIG. 9. Hereinafter, the disposition state of the hydrogen-permeation-preventing layer 21 in the pressure-sensing diaphragm 13 will be described on the basis of FIGS. 10A and 10B. Note that the configuration to be described here also applies to the pressure-sensing diaphragm 13' in the low-pressure side, and therefore the configuration in the high-pressure side will be described as a representative example. The hydrogen-permeation-preventing layers 21a, 21b in the configurations described below in FIGS 10A and 10B respectively may be used in combination.

FIG. 10A is a diagram illustrating the configuration in which the hydrogen-permeation-preventing layer 21a is provided on the surface layer on the side of the impulse line 11 in the pressure-sensing diaphragm 13. The hydrogen-permeation-preventing layer 21a is preferably provided in a state of covering as wide surface as possible in the pressure-sensing diaphragm 13 to inhibit the exposure of the pressure-sensing diaphragm 13 to the sealed liquid L. In the case that the air tightness of the impulse line 11 and the resistance of the hydrogen-permeation-preventing layer 21 can be ensured, the hydrogen-permeation-preventing layer 21 may be provided on the whole surface of the surface layer on the side of the impulse line 11 in the pressure-sensing diaphragm 13.

This hydrogen-permeation-preventing layer 21a is formed as a film on the surface of the pressure-sensing diaphragm 13 with a plating method, a sputtering method or the like, and it is easy to dispose on the pressure-sensing diaphragm 13.

FIG. 10B is a diagram illustrating the configuration in which the hydrogen-permeation-preventing layer 21b is provided as an intermediate layer of the pressure-sensing diaphragm 13. The hydrogen-permeation-preventing layer 21b is preferably provided as a thin film held between the two pressure-sensing diaphragms 13a, 13b and has a size to close the opening of the pressure-receiving chamber 11a, which is one opening of the impulse line 11. In the case that this hydrogen-permeation-preventing layer 21b includes a hydrogen storage material, the hydrogen-permeation-preventing layer 21b is not limited to a thin film and the configuration in which powder is packed tightly and held between the two pressure-sensing diaphragms 13a, 13b is also possible.

This hydrogen-permeation-preventing layer 21b is formed as a unit as an intermediate layer of the pressure-sensing diaphragm 13 by rolling two pressure-sensing diaphragms 13a, 13b with the hydrogen-permeation-preventing layer 21b in a thin film or powder held therebetween to integrate. In addition, this hydrogen-permeation-preventing layer 21b never influence the sealed liquid L, not only the fluids to be measured Fh, Fl.

In the case that the characteristics of the fluids to be measured Fh, Fl are uneven, the hydrogen-permeation-preventing layer 21 may be provided on only one of the pressure-sensing diaphragms 13, 13'. Moreover, in the case that the environments in which the impulse lines 11, 11' are disposed are uneven and the hydrogen storage material 19 is provided within one of the impulse lines 11, 11', a synergistic effect as described below can be obtained by providing the hydrogen-permeation-preventing layer 21 on the side on which the hydrogen storage material 19 is provided.

### <Effect>

The above-described instrumentation equipment for a nuclear power plant of the second embodiment is provided in a nuclear power plant primary system and has the configuration in which the pressure transmitter 2 having the pressure-sensing diaphragms 13, 13' provided with the hydrogen-permeation-preventing layers 21 is provided. Thereby, hydrogen contained in the fluids to be measured Fh, Fl can be prevented from mixing into the sealed liquid L filled within the impulse lines 11, 11'. Accordingly, even in the case that the fluids to be measured Fh, Fl are the reactor water 52 with a higher concentration of hydrogen, the pressure within the impulse lines 11, 11' can be sufficiently stabilized and reliability and maintainability can be further improved in addition to the effect of the instrumentation equipment for a nuclear power plant of the first embodiment.

Here, in the case of a configuration in which the hydrogen-permeation-preventing layer 21 is simply provided on the pressure-sensing diaphragms 13, 13', hydrogen and hydrocarbons generated due to the decomposition of the sealed liquid L are not released outside and the pressure within the impulse lines 11, 11' cannot be stabilized. In order to solve this problem, it is important to inhibit the generation itself of hydrogen and hydrocarbons due to the decomposition of the sealed liquid L. For this purpose, the hydrogen storage material 19 is provided within the impulse lines 11, 11' to inhibit the formation of bubbles in the impulse lines 11, 11'.

The methylphenyl silicone oil may be also used as the sealed liquid L for the pressure transmitter 2 illustrated in FIGS. 9, 10 in the present embodiment. In this case, the concentration of hydrocarbons such as methane, ethane and propane in the sealed liquid L can be still more lowered and the formation of bubbles in the impulse lines 11, 11' can be still more inhibited in comparison with the case that the dimethyl silicone oil is used. Further, the instrumentation equipment for the nuclear power plant having such pressure transmitter has an improved reliability and maintainability in addition to the above effects.

Moreover, in the case that the environments in which the impulse lines 11, 11' are disposed are uneven and the hydrogen storage material 19 and the hydrogen-permeation-preventing layer 21 are provided within one of the impulse lines 11, 11', a synergistic effect can be obtained by providing silicone oil containing the phenyl group in the side in which the hydrogen storage material 19 and the hydrogen-permeation-preventing layer 21 are provided.

### «Third Embodiment»

### (Application Example of Pressure Transmitter for Measurement of Absolute Pressure)

In the instrumentation equipment for the nuclear power plant according to the third embodiment, only the configuration of a pressure transmitter is different from that in the above instrumentation equipment for the nuclear power plant in FIG. 1 and the other configurations are the same as in FIG. 1. Hereinafter, the pressure transmitter 3, which is the characterizing part of the instrumentation equipment for the nuclear power plant according to the present embodiment, will be described in detail.

### (Configuration of Pressure Transmitter 3)

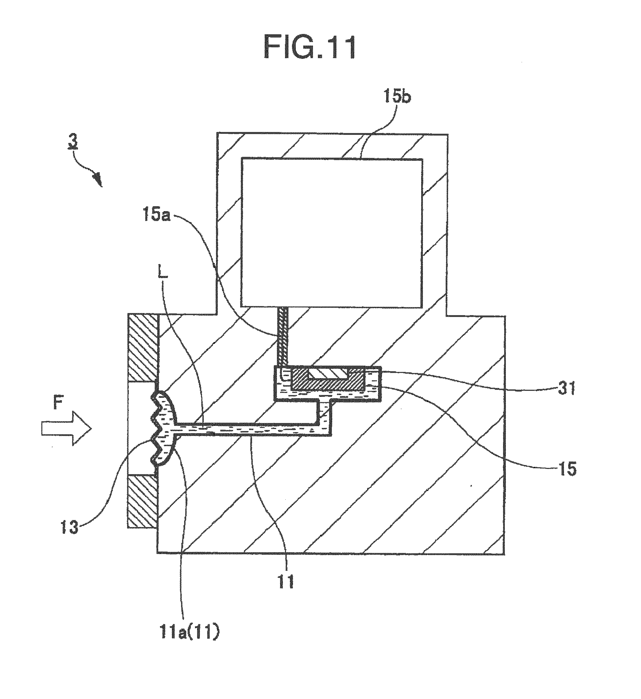

FIG. 11 is a diagram illustrating the configuration of a pressure transmitter, which is the principal part of the instrumentation equipment for the nuclear power plant according to the third embodiment. The pressure transmitter 3 illustrated in FIG. 11 is used for pressure measurement of the reactor water 52 in the nuclear power plant primary system illustrated in FIG. 1 as a fluid to be measured and is for measurement of absolute pressure to measure the pressure of the fluid to be measured F. The pressure transmitter 3 is different from the pressure transmitter 1 described using FIG. 2 in that it has one pressure-sensing diaphragm 13 and one impulse line 11 for one pressure sensor 15 only, and the other configurations are the same.

In the configuration, the other opening of the impulse line 11 is disposed only on the side of one surface of the pressure sensor 15, and the pressure of the fluid to be measured F received by the pressure-sensing diaphragm 13 provided on one opening of the impulse line 11 is detected. Further, a vacuum chamber 31 is provided on the other side of the pressure sensor 15, and a vacuum pump (not shown) is provided via the vacuum chamber 31. Thereby, the other side of the pressure sensor 15 is evacuated.

Moreover, the pressure transmitter 3 as described above may be combined with the pressure transmitter 2 described using FIGS. 9, 10, and for example, a hydrogen-permeation-preventing layer may be provided on the pressure-sensing diaphragm 13 in the pressure transmitter 3.

In the instrumentation equipment for the nuclear power plant having the pressure transmitter 3, the pressure-sensing diaphragm 13 is connected to a part of a piping in which a fluid to be measured in the nuclear power plant primary system flows.

### <Effect>

Even with the instrumentation equipment for the nuclear power plant of the third embodiment having the above-described pressure transmitter 3, the same effect as described in the first and second embodiments can be obtained.

The methylphenyl silicone oil may be also used as the sealed liquid L for the pressure transmitter 3 illustrated in FIG. 11 in the present embodiment. In this case, the concentration of hydrocarbons such as methane, ethane and propane in the sealed liquid L can be still more lowered and the formation of bubbles in the impulse lines 11, 11' can be still more inhibited in comparison with the case that the dimethyl silicone oil is used. Further, the instrumentation equipment for the nuclear power plant having such the pressure transmitter has an improved reliability and maintainability in addition to the above effects.

### «Fourth Embodiment»

### (Application Example of Pressure Transmitter Provided with Intermediate Diaphragm)

In the instrumentation equipment for the nuclear power plant according to the fourth embodiment, only the configuration of a pressure transmitter is different from that in the above instrumentation equipment for the nuclear power plant in FIG. 1 and the other configurations including the disposition state for the nuclear power plant primary system are the same as in FIG. 1. Hereinafter, a pressure transmitter 4, which is the characterizing part of the instrumentation equipment for the nuclear power plant according to the present embodiment, will be described in detail.

### <Configuration of Pressure Transmitter 4>

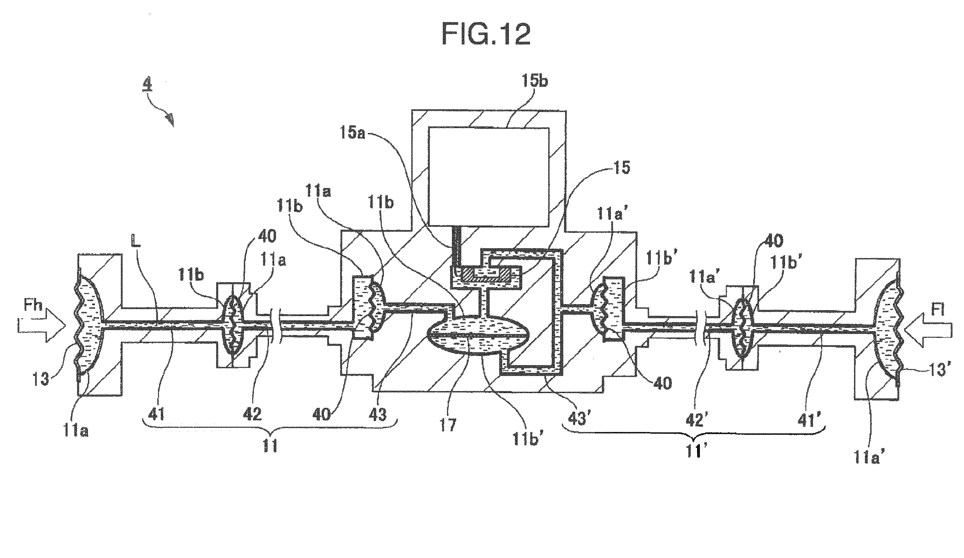

FIG. 12 is a diagram illustrating the configuration of a pressure transmitter, which is the principal part of the instrumentation equipment for the nuclear power plant according to the fourth embodiment. The pressure transmitter 4 illustrated in FIG. 12 is used for pressure measurement of the reactor water 52 in the nuclear power plant primary system illustrated in FIG. 1 as a fluid to be measured and in particular suitably used under a high-temperature environment, and here will be described as the pressure transmitter for measurement of a difference of pressures between two points (high-pressure side and low-pressure side). The pressure transmitter 4 is different from the pressure transmitter 1 described using FIG. 2 in that the impulse lines 11, 11' are composed of a plurality of pipe parts 41, 42, ..., 41', 42', ... connected together and intermediate diaphragms 40 are provided at the connections, and the other configurations are the same. Therefore, the same configuration as in the pressure transmitter 1 illustrated in FIG. 2 is given with the identical symbol and overlapping descriptions are omitted.

### [Impulse Lines 11, 11']

The impulse lines 11, 11' have the plurality of pipe parts 41, 42, ..., 41', 42', ..., connected in series. In the example illustrated, the impulse line 11 is composed of three pipe parts 41, 42, 43 and the impulse line 11' is composed of three pipe parts 41', 42', 43'. The pipe parts 41 to 43' constitute pressure-receiving chambers 11a, 11a' in which the opening diameter is enlarged at the opening parts of the pipe parts on the pressure-receiving side for the fluids to be measured Fh, Fl, and pressure-relieving chambers 11b, 11b' in which the opening diameter is enlarged at the other opening parts of the pipe parts.

Further, the pipe parts 41, 41', which are disposed on the side nearest to the fluids to be measured Fh, Fl in the respective impulse lines 11, 11' constitute replacer parts. The opening parts of the pressure-receiving chambers 11a, 11a' in the pipe parts 41, 41' are closed by the pressure-sensing diaphragms 13, 13', respectively. Then, the impulse lines 11, 11' are installed on measurement sites in the primary system of the nuclear power plant 100. The impulse lines 11, 11' are connected to pipings in which the fluids to be measured flow at openings on the side closed by the pressure-sensing diaphragms 13, 13', respectively. On the other hand, the pipe parts 43, 43', which are disposed on the side nearest to the pressure sensor 15 in the respective impulse lines 11, 11' constitute a main part including the pressure sensor 15. The openings of the pressure-relieving chambers 11b, 11b' in the respective pipe parts 43, 43' are disposed so as to hold one center diaphragm 17 therebetween, and closed by the center diaphragm 17.

The pipe parts 42, 42' disposed in the centers of the respective impulse lines 11, 11' constitute capillary parts, which are connection sites between the pipe parts 41, 41' constituting the replacer parts and pipe parts 43, 43' constituting the main part.

At each of the connections between pipe parts 41, 42, 43, 41', 42', 43', the opening of pressure-relieving chamber 11b is disposed to be opposed to the opening of the pressure-receiving chamber 11a, and the intermediate diaphragm 40 is held at the opposing part, and the connection is closed by the intermediate diaphragms 40. That is, although the impulse lines 11, 11' have configurations in which the plurality of pipe parts 41, 42, 43, 41', 42', 43' are connected, each of the inner spaces is separated by the intermediate diaphragm 40.

And the sealed liquid L is filled within the pipe parts 41, 42, 43, 41', 42', 43' independently closed by the pressure-sensing diaphragms 13, 13', the pressure sensor 15, the center diaphragm 17 and the respective intermediate diaphragms 40. The sealed liquid L is the same silicone oil containing the phenyl group (e.g., methylphenyl silicone oil) as in the second embodiment. Furthermore, the pipe parts 41, 42, 43, 41', 42', 43' constituting the impulse lines 11, 11' are provided with the same hydrogen storage material in the same disposition state as in the first embodiment.

Here, the configuration is not limited to one in which all of the pipe parts 41, 42, 43, 41', 42', 43' contain the silicone oil containing the phenyl group as the sealed liquid L and are provided with the hydrogen storage material 19 therewithin, and this configuration may be applied to only a selected pipe part.

### [Intermediate Diaphragm 40]

The intermediate diaphragms 40 are provided in the intermediate parts of the impulse lines 11, 11' disposed between the pressure-sensing diaphragms 13, 13' and the pressure sensor 15, and are for preventing the destruction of the pressure-sensing diaphragms 13, 13' and the pressure sensor 15 due to an excess pressure. Such intermediate diaphragms 40 are provided so as to close the respective intermediate parts of the impulse lines 11, 11' and to separate the impulse lines 11, 11' into the plurality of pipe parts 41, 42, 43, 41', 42', 43' and expose both sides to the respective sealed liquids L. Thereby, even when the excess pressure is applied to one of the pressure-sensing diaphragms 13, 13', the intermediate diaphragm 40 serves as a buffer for the excess pressure and the destruction of the pressure-sensing diaphragms 13, 13 and the pressure sensor 15 is less likely to occur in this configuration,. The intermediate diaphragm 40 disposed nearest to the pressure sensor 15 constitutes the main part as a seal diaphragm.

A hydrogen storage material may be provided on the intermediate diaphragm 40. In this case, the surface area of the hydrogen storage material can be further enlarged by providing the hydrogen storage material on both surfaces of the intermediate diaphragm 40 contacting with the sealed liquid L.

In the case that the characteristics of the fluids to be measured Fh, Fl are uneven, the hydrogen storage material 19 may be provided within only one of the impulse lines 11, 11' or the hydrogen storage material 19 may be provided within a desired pipe part among the pipe parts 41, 42, ..., 41', 42', ... in the impulse lines 11, 11'.

Moreover, the pressure transmitter 4 as described above may be combined with the pressure transmitter 2 described using FIGS. 9, 10, and provided with a hydrogen-permeation-preventing layer on the pressure-sensing diaphragms 13, 13'. In addition, the pressure transmitter 4 for measurement of absolute pressure can be obtained by using only one of the impulse lines 11, 11' as in the case of the pressure transmitter 3 described using FIG. 11.

The instrumentation equipment for the nuclear power plant of the present embodiment has been described as one to measure the differential pressure between two points, however is not limited to this and for example, may measure the gauge pressure of the fluid to be measured Fh in the high-pressure side using the atmosphere as the fluid to be measured Fl in the low-pressure side.

### <Effect>

The above-described instrumentation equipment for the nuclear power plant of the fourth embodiment is used in a high-temperature environment, and therefore is instantaneously exposed to a high-temperature atmosphere (e.g., higher than 300°C) in some cases. Even in such a case, the same effect as in the first embodiment can be obtained because the instrumentation equipment for the nuclear power plant has the configuration in which the pressure transmitter 4 having the hydrogen storage material within the pipe parts 41, 42, 43, 41', 42', 43' constituting the impulse lines 11, 11' is provided. Moreover, the same effect as in the second embodiment can be obtained by combining with the second embodiment, i.e., employing the configuration in which the hydrogen-permeation-preventing layers are provided on the pressure-sensing diaphragms 13, 13'.

The methylphenyl silicone oil may be also used as the sealed liquid L for the pressure transmitter 4 illustrated in FIG. 12 in the present embodiment. In this case, the concentration of hydrocarbons such as methane, ethane and propane in the sealed liquid L can be still more lowered and formation of bubbles in the impulse lines 11, 11' can be still more inhibited in comparison with the case that the dimethyl silicone oil is used. And instrumentation equipment for the nuclear power plant having such pressure transmitter has an improved reliability and maintainability in addition to the above effects.

Moreover, in the case that the environments in which the impulse lines 11, 11' are disposed are uneven and the hydrogen storage material 19 is provided within one of the impulse lines 11, 11', a synergistic effect can be obtained by providing silicone oil containing the phenyl group in the side on which the hydrogen storage material 19 is provided.

In the above, it has been illustrated that the instrumentation equipment for the nuclear power plant of the first to fourth embodiments can be used for process measurement in the nuclear power plant primary system. However, without limiting to this, instrumentation equipment for the nuclear power plant having a configuration in combination of these configurations may also be used. In the case of the measurement of absolute pressure, however, the instrumentation equipment for the nuclear power plant of the third embodiment or one having a configuration combined with this is used.

In addition, the nuclear power plant with which the instrumentation equipment for the nuclear power plant of the present invention is provided is not limited to the above-described boiling water reactor type, and for example, may be a nuclear power plant of pressurized water reactor (PWR) type. Also in this case, the same effect can be obtained by using the instrumentation equipment for the nuclear power plant of the present invention for various process measurement for reactor water (primary cooling water) which directly cools the reactor core as a fluid to be measured.

In the above, the embodiments of the present invention have been described. However, the present invention is not limited to the above-described embodiments, and various variations can be made without departing from the gist recited in Claims.

For example, the above examples of the embodiments are for the detailed and specific explanation of the configuration of the apparatus and system in order to describe the present invention clearly, and are not necessarily limited to an embodiment in which all of the configurations described are provided. Further, a part of configurations of a certain embodiment can be replaced with configurations of the other embodiment, and furthermore, configurations of the other embodiment example can be added to configurations of a certain embodiment example. In addition, it is also possible to make an addition, deletion and replacement of a part of the configurations of each embodiment example.

The control lines and information lines shown are those considered to be necessary for the description, and not all of the control lines and information lines are shown in the product. It may be considered that in fact almost all of the configurations are connected to each other.

## Claims

1. Instrumentation equipment for a nuclear power plant (10) comprising:
a tubular impulse line (11, 11') provided on a site to measure a fluid to be measured (F, Fh, Fl) in a primary system of a nuclear power plant (100);
a sealed liquid (L) filled within the impulse line (11, 11');
a pressure-sensing diaphragm (13, 13') to receive a pressure of the fluid to be measured (F, Fh, Fl), the pressure-sensing diaphragm (13, 13') provided in a state of closing one opening of the impulse line (11, 11');
a pressure sensor (15) provided on another opening of the impulse line (11, 11') in a state of being exposed to the sealed liquid (L); and
a hydrogen storage material (19, 19a, 19b, 19c) provided within the impulse line (11, 11').

2. The instrumentation equipment for a nuclear power plant (10) according to claim 1, wherein the sealed liquid (L) is silicone oil containing a phenyl group.

3. The instrumentation equipment for a nuclear power plant (10) according to claim 2, wherein the silicone oil is methylphenyl silicone oil.

4. The instrumentation equipment for a nuclear power plant (10) according to any one of claims 1 to 3, wherein the hydrogen storage material (19, 19a, 19b, 19c) stores hydrogen and hydrogen atoms in a hydrocarbon generated in the impulse line (11, 11').

5. The instrumentation equipment for a nuclear power plant (10) according to any one of claims 1 to 4, wherein the hydrogen storage material (19, 19a, 19b, 19c) is disposed along a direction of an arrangement of the impulse line (11, 11').

6. The instrumentation equipment for a nuclear power plant (10) according to claim 5, wherein the hydrogen storage material (19, 19a, 19b, 19c) is mixed in the sealed liquid (L).

7. The instrumentation equipment for a nuclear power plant (10) according to any of claims 1 to 6, wherein the hydrogen storage material (19, 19a, 19b, 19c) is palladium, magnesium, vanadium, titanium, manganese, zirconium, nickel, niobium, cobalt, calcium, or an alloy thereof.

8. The instrumentation equipment for a nuclear power plant (10) according to any of claims 1 to 7, wherein a hydrogen-permeation-preventing layer (21, 21a, 21b) is provided on the pressure-sensing diaphragm (13, 13').

9. The instrumentation equipment for a nuclear power plant (10) according to claim 8, wherein the hydrogen-permeation-preventing layer (21, 21a, 21b) is provided as a surface layer on a side of the impulse line (11, 11') in the pressure-sensing diaphragm (13, 13') or an intermediate layer of the pressure-sensing diaphragm (13, 13').

10. The instrumentation equipment for a nuclear power plant (10) according to claim 8 or 9, wherein the hydrogen-permeation-preventing layer (21, 21a, 21b) comprises a hydrogen storage material or a hydrogen blocking material.

11. The instrumentation equipment for a nuclear power plant (10) according to any one of claims 8 to 10, wherein the hydrogen-permeation-preventing layer (21, 21a, 21b) comprises gold, silver, copper, platinum, aluminum, chromium, titanium or an alloy thereof.

12. The instrumentation equipment for a nuclear power plant (10) according to any one of claims 1 to 11, wherein a pair of the impulse lines (11, 11') having the sealed liquid (L) filled therewithin with one openings thereof closed by the pressure-sensing diaphragms (13, 13'), respectively, is disposed in a state of holding the pressure sensor (15) on both sides.

13. The instrumentation equipment for a nuclear power plant (10) according to claim 12 comprising a center diaphragm (17) held in parallel with the pressure sensor (15) for the pair of the impulse lines (11, 11'), and the hydrogen storage material (19, 19a, 19b, 19c) provided on the center diaphragm (17).

14. The instrumentation equipment for a nuclear power plant (10) according to any one of claims 1 to 13, wherein the impulse line (11, 11') comprises a plurality of pipe parts (41, 42, 43, 41', 42', 43') connected in series and intermediate diaphragms (40) provided at respective connections of the pipe parts, and the hydrogen storage material (19, 19a, 19b, 19c) is provided on the intermediate diaphragms (40).
